# EUROPEAN PATENT APPLICATION

(11) **EP 3 650 108 A1**
(43) Date of publication of application: **13.05.2020**
(21) Application number: 17916671.5
(22) Date of filing: 09.11.2017
(51) Int. Cl.: B01D 53/75, B01D 53/00, B01D 53/38, B01D 46/00, B01D 53/26

(54) **APPARATUS FOR REMOVING WHITE SMOKE AND FOG**

(30) Priority: 04.07.2017 KR 20170084991
(71) Applicant: Nuriplan Co., Ltd, Gimpo-si, Gyeonggi-do 10027 (KR)
(72) Inventor: CHOI, Jun Seong, Jeungpyeong-gun Chungcheongbuk-do 27909 (KR); LEE, Seong Gyun, Anyang-si Gyenggi-do 14078 (KR); LEE, Gyu Hong, Seoul 07559 (KR); LEE, Sang Woo, Seoul 06583 (KR)
(74) Representative: Goddar, Heinz J.
(86) International application number: PCT/KR2017/012698
(87) International publication number: WO 2019/009468

(57) **Abstract**

According to the present invention, an apparatus for removing white smoke and mist is provided, comprising: a heat exchanger for generating dry air and condensation nucleus, wherein said dry air is produced by heating air through fuel combustion and said condensation nucleus is produced from combustion particles through fuel combustion; a sprayer connected to the heat exchanger via a connection duct so as to receive said dry air and said condensation nucleus from the heat exchanger and to spray said dry air and said condensation nucleus far away with a powerful wind pressure toward the location where white smoke or mist is generated; a condensation nucleus anion generator located within the connection duct connecting the heat exchanger to the sprayer, so as to generate anion and to make the generated anion to be coupled with the condensation nucleus, to thereby produce anionized condensation nucleus; a dust collecting filter installed between the heat exchanger and the connection duct so as to filter dust material from said dry air;
a moisture removal filter formed at a rear end of the sprayer so as to remove moisture while drawing air from atmosphere; a housing within which the heat exchanger, the connection duct, the sprayer, the dust collecting filter and the moisture removal filter are mounted in a compact manner, wherein a fuel tank supplying fuel for heating air in the heat exchanger is provided in the housing and wherein the housing is mobile by means of casters on its lower side; and a bellows located at a lower and outer side of the housing corresponding to a front end of the sprayer, wherein the bellows is in communication with the sprayer and extends with a predetermined length.

## Description

### Field of The Invention

The present invention is related to an apparatus for removing white smoke and mist. More particularly, the present invention is related to the apparatus for removing white smoke and mist, wherein dry air and anion condensation nucleus are sprayed onto an area of white smoke or mist when white smoke or mist is generated due to damage to piping, so that white smoke or mist particles are precipitated and evaporated for removal of white smoke and mist.

### Background of The Invention

Generally, white smoke or mist is generated by contact between hot water leak due to damage to heating pipes and cold air in winter season or by steam condensation due to contact between steam and cold air. When performing repair of pipe, white smoke cause visibility to decrease, and thus, negligent accidents happen and delay increases in work.

Accordingly, there have been disclosed apparatuses for removing white smoke and mist, wherein these apparatuses are provided for reducing white smoke or mist due to ground excavation and wherein they have such a configuration as to forcibly discharge white smoke or mist existing in excavated ground base using a blower.

However, since the above apparatuses for removing white smoke and mist based on forcible discharge do not remove white smoke or mist in a complete way, it takes a long time to remove white smoke or mist when there is too much white smoke or mist. Accordingly, a fast repair is impossible.

Also, the prior art apparatus for removing white smoke and mist based on forcible discharge is mainly applied to and installed on an incinerator, a melting furnace or a wet type-devulcanizing installation, which discharges air pollutants. Such apparatus has an immobile configuration, and thus, it is generally impossible to apply the apparatus to a road or an area of white smoke, if white smoke is generated due to damage to underground pipes located below a street on which people or vehicles are passing.

### -Prior Art Document-

(Patent Document 1) KR 10-1746096
(Patent Document 2) KR 10-2010-0042577
(Patent Document 3) KR 10-1559546

### Detailed Description of the Invention

### Summary of the Invention

The object of the present invention is to provide an apparatus for removing white smoke or mist, wherein dry air and anion condensation nucleus are sprayed onto an area of white smoke or mist for removing white smoke or mist through precipitation and evaporation of white smoke and mist particles.

Also, the other object of the present invention is to provide an apparatus for removing white smoke and mist, components of which are compactly accommodated within a housing with a predetermined size. Accordingly, the apparatus for removing white smoke and mist may be readily moved to a location where white smoke or mist is generated.

Another object of the present invention is to provide an apparatus for removing white smoke and mist, wherein a bellows extends from the housing to an area of white smoke or mist in order to remove white smoke or mist generated on a lower level of ground base, while the housing is positioned on a higher level of ground surface.

Other objects of the present invention are not limited to the above-described objects, and one of ordinary skill in the art may readily understand other objects that are not mentioned above by reading the following detailed description. 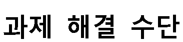

According to the present invention, an apparatus for removing white smoke and mist is provided, which comprises:
a heat exchanger for generating dry air and condensation nucleus, wherein said dry air is produced by heating air through fuel combustion and said condensation nucleus is produced from combustion particles through fuel combustion;
a sprayer connected to the heat exchanger via a connection duct so as to receive said dry air and said condensation nucleus from the heat exchanger and to spray said dry air and said condensation nucleus far away with a powerful wind pressure toward the location where white smoke or mist is generated;
a condensation nucleus anion generator located within the connection duct connecting the heat exchanger to the sprayer, so as to generate anion and to make the generated anion to be coupled with the condensation nucleus, to thereby produce anionized condensation nucleus; a dust collecting filter installed between the heat exchanger and the connection duct so as to filter dust material from said dry air; a moisture removal filter formed at a rear end of the sprayer so as to remove moisture while drawing air from atmosphere; a housing within which the heat exchanger, the connection duct, the sprayer, the dust collecting filter and the moisture removal filter are mounted in a compact manner, wherein a fuel tank supplying fuel for heating air in the heat exchanger is provided in the housing and wherein the housing is mobile by means of casters on its lower side; and a bellows located at a lower and outer side of the housing corresponding to a front end of the sprayer, wherein the bellows is in communication with the sprayer and extends with a predetermined length.

The apparatus for removing white smoke and mist is preferably provided with a tilt type-search light which is mounted to an exterior upper side of the housing.

Preferably, the apparatus for removing white smoke or mist further comprise power generating means located inside or outside the housing for supplying operation power to the sprayer, the condensation nucleus ion generator, the dust collecting filter and the moisture removing filter.

### Advantages of the Invention

In the present invention, when white smoke or mist is generated in the atmosphere due to hot water leaking from a damaged pipe, dry air and anion condensation nucleus are sprayed onto an area of white smoke or mist, so that it is possible to completely remove white smoke or mist by precipitating and evaporating white smoke or mist particles.

Also, since components of the apparatus for removing white smoke or mist are compactly accommodated within the housing with a predetermined size, easy movement and access to an area of white smoke or mist are possible for fast removal of white smoke or mist.

Additionally, the bellows extends from the housing to an area of white smoke or mist. Accordingly, it is possible to spray dry air and anion condensation nucleus onto the area of white smoke or mist through the bellows for removal of white smoke or mist, even if it is impossible for the housing to reach the area of white smoke or mist because of a distance from a ground surface to a ground base is too deep.

The advantages of the present invention are not restricted to the above-mentioned ones and other advantages may be readily understood by one of ordinary skill in the art with reference to the recitations in the claims.

### Brief Description of The Invention

Figure 1 is a perspective view showing an apparatus for removing white smoke and mist according to an embodiment of the present invention;
Figures 2 to 4 are front, rear and interior views of the apparatus for removing white smoke and mist as shown in Figure 1;
Figures 5 to 7 shows a configuration of a heat exchanger received in the apparatus for removing white smoke and mist as shown in Figure 1.
Figure 8 shows removal of white smoke using the apparatus for removing white smoke and mist as shown in Figure 1.

### Detailed Description of the Invention

Herein below, a preferred embodiment of the present invention will be described in detail with reference to the drawings.

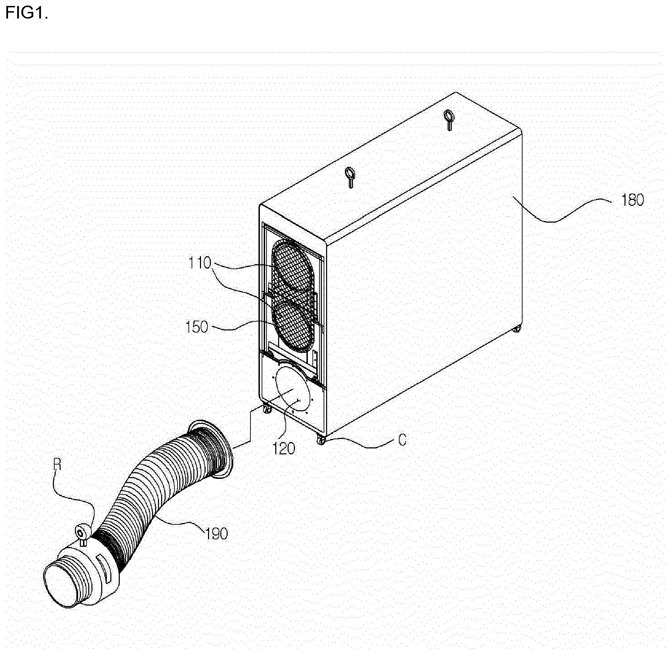

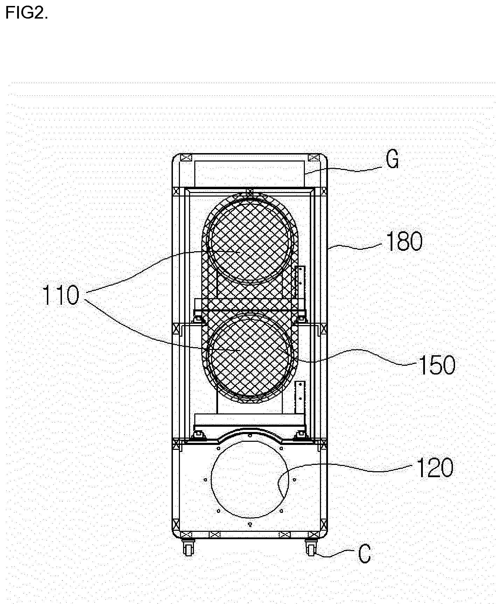

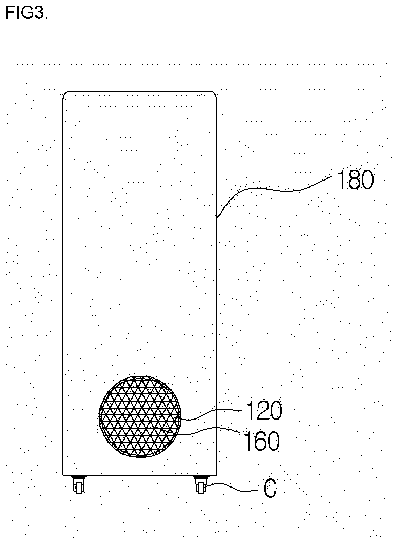

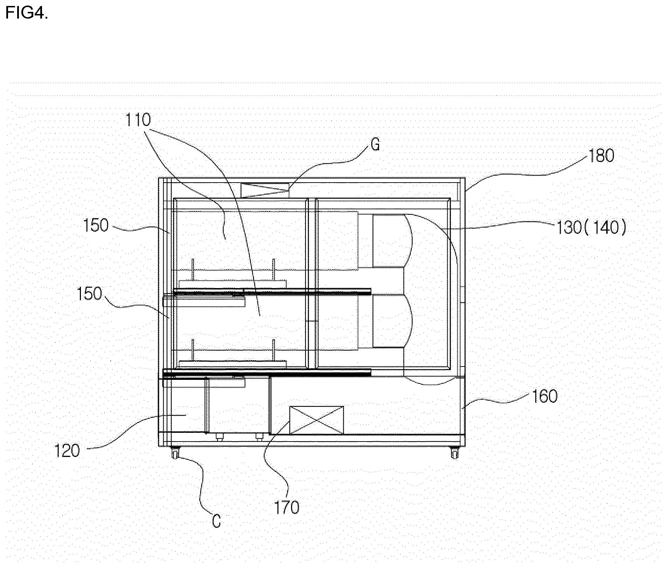

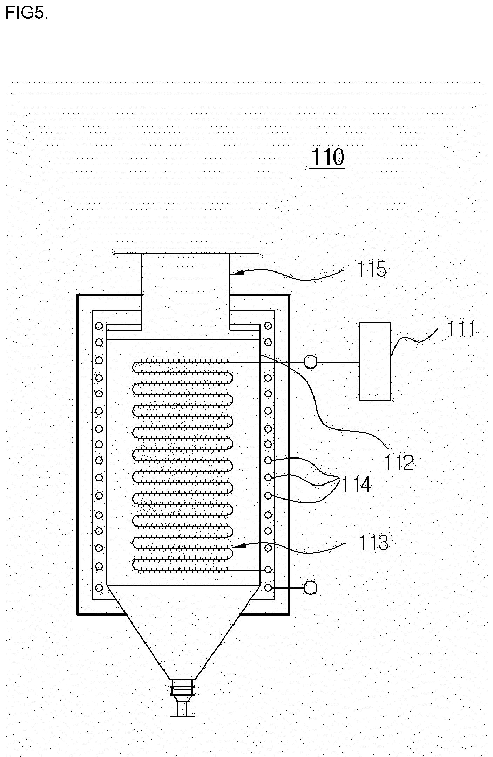

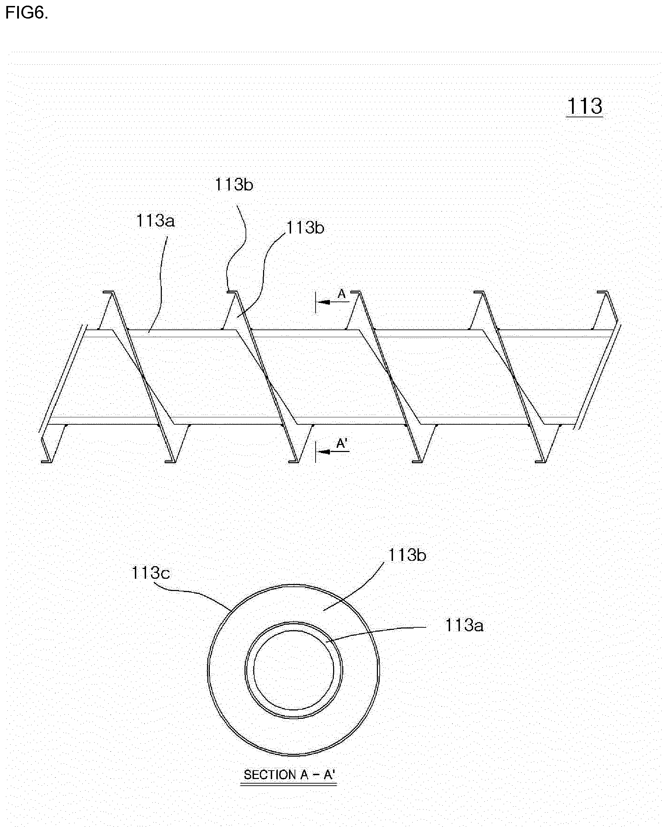

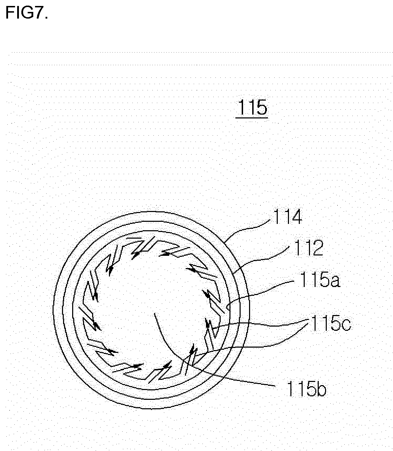

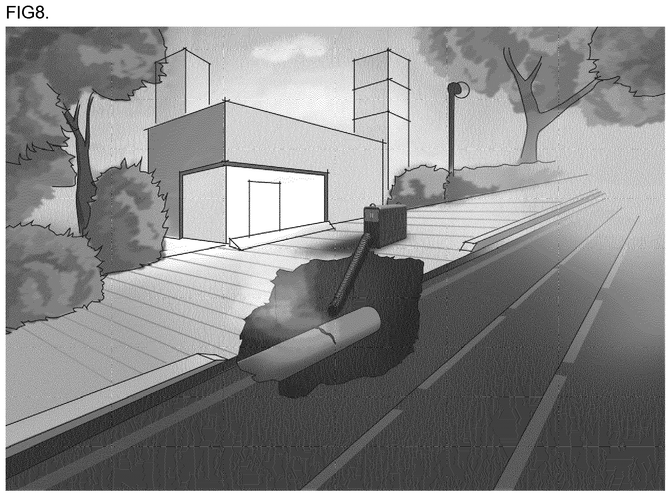

As shown in Figures 1-8, an apparatus for removing white smoke and mist according to the preferred embodiment of the present invention comprises: a heat exchanger (110) for generating dry air and condensation nucleus, wherein dry air is generated by heating air through fuel combustion and wherein condensation nucleus is generated from combustion particles produced through fuel combustion; a sprayer (120) connected to the heat exchanger (110) via a connection duct (130) so as to receive dry air and condensation nucleus from the heat exchanger (110) and to spray dry air and condensation nucleus with a powerful wind pressure toward a location where white smoke or mist is generated, i.e., where the piping is damaged or destroyed; a condensation nucleus anion generator (140) located within the connection duct (130) connecting the heat exchanger (110) to the sprayer (120), so as to generate anion through tourmaline and to make the anion to be coupled with the condensation nucleus, to thereby produce anionized condensation nucleus; a dust collecting filter (150) installed between the heat exchanger (110) and the connection duct (130) or at the heat exchanger (110) so as to filter dust from dry air generated from heat exchange process in the heat exchanger (110); a moisture removal filter (160) formed at a rear end of the sprayer (120) so as to remove moisture, while drawing air from atmosphere; and, a housing (180) within which the heat exchanger (110), the connection duct (130), the sprayer (120), the dust collecting filter (150) and the moisture removal filter (160) are mounted in a compact manner, wherein a fuel tank (170) supplying fuel for heating air in the heat exchanger (110) is received in the housing and wherein the housing is mobile by means of casters (C).

In the present invention, the apparatus for removing white smoke and mist has a bellows (190) at a lower and outer side of the housing (180) corresponding to a front end of the sprayer (120), wherein the bellows (190) is in communication with the sprayer (120) and extends with a predetermined length. Accordingly, even if it is impossible to move the hosing (180) to a location of white smoke or mist, dry air and condensation nucleus sprayed through the sprayer (120) can reach an area where white smoke or mist is generated.

In the present invention, it is preferable that the apparatus for removing white smoke and mist has a search light (R) mounted to an upper and exterior part of the housing or an end of the bellows (190), to thereby make it possible to perform removal of white smoke or mist even at night time.

When the search light (R) is provided on the housing (180), it is preferable to have a tilt structure for adjusting an illumination angle. Otherwise, if the search light (R) is provided at an end of the bellows (190), it is preferable to have a power supply battery and to have an on/off switch provided on a handle for gripping the bellows (190).

In addition to the sprayer (120), the condensation nucleus anion generator (140), the dust collecting filter (150) and the moisture removal filter (160), the apparatus for removing white smoke and mist of the present invention further comprises a power generator means (G) supplying power to the search light (R) installed within or outside of the housing (180).

The housing (180) of the present invention is formed by a frame and cover panels installed to outer faces of the frame so as to provide a predetermined space for receiving the above-stated components, wherein the frame has a length ranging between 180cm and 200 cam, a height ranging between 150cam and 180 cam, and a width ranging 50 cm and 60 cm. By means of the casters (C) installed on the lower panel, an operator may move the apparatus for removing white smoke and mist weighing about 300 Kg, so that the apparatus can have access to the location of white smoke or mist in a convenient way.

It is preferable to further comprise a connection ring installed on an upper frame or the cover panel of the housing (180). Accordingly, the apparatus may be lifted or lowered to the location of white smoke or mist, while the connection ring is connected to a connection wire of a lift.

Also, it is preferable to provide a mount that may be mounted to or demounted from the frame of the housing (180) by guiding the mount with respect to the frame using guide rollers, while a combustion tank (111) or a heat exchange tank (112) of the heat exchanger (110) is seated on the mount. Thereby, a convenient maintenance is possible.

The heat exchanger (110) is means for generating dry air by heating air through fuel combustion and for generating condensation nucleus from combustion particles produced through fuel combustion. The heat exchanger (110) comprises the combustion tank (111) for fuel combustion; the heat exchange tank (112) located at a side of the combustion tank (111) to receive air inflow from outside and to provide a space for heat exchanging with combustion heat; a heat exchange duct (113) extending from the combustion tank (111) and configuring a zigzag form or a spiral form within an interior space of the heat exchange tank (112), wherein the heat exchange duct (113) allows travelling of combustion heat so as attain heat exchange of outside air which flows into the heat exchange tank (112); a radiation preventive duct (114) extending from an end of the heat exchange duct (113) and configuring a zigzag form or a spiral form on an outer surface of the heat exchange tank (112), so as to allow travelling of combustion heat after heat exchange, for the purpose of preventing heat radiation from the outer surface of the heat exchange tank (112) due to contact with outside air; and, an outside air-inflow duct (115) for allowing outside air to flow into the heat exchange tank (112) in a spiral form, so as to increase the time for outside air to travel in the heat exchange tank (112), to thereby improve heat exchange efficiency.

The heat exchange duct (113) is an exhaust pipe to allow combustion heat, which is generated from fuel combustion within the combustion tank (111), to be discharged outside. The heat exchange duct (113) comprises: a heat exchange tube (113a) with a predetermined diameter; heat transfer plates (113b) in the form of a circular plate, which are bonded to outer surface of the heat exchange tube (113a) with a uniform interval, for improving strength of the heat exchange tube (113a) and for improving heat exchange efficiency accompanied by increase of heat transfer area; and, heat transfer fins (113c) bended at an edge of the heat transfer plate (113b) to have an 'L' shape, so as to cause resistive force against outside air for improving the heat exchange efficiency through turbulent flow within the heat exchange tank (112).

Here, it is possible to further improve drying efficiency of outside air by means of a plurality of the heat transfer plates (113b) bonded to the outer surface of the heat exchange tube (113a), along with the heat transfer fins (113c) formed at the edge of the heat transfer plate (113b).

When comparing to a number of heat transfer projections bonded to the heat exchange tube (113a) for increasing heat transfer area, the configuration of the heat transfer plates (113b) bonded to the outer surface of the heat exchange tube (113a) allows the boning operation to be performed in relatively simple way, while providing the same or a larger heat transfer area. Accordingly, it is possible to improve workability through the modification of bonding configuration.

The outside air-inflow duct (115) is means for allowing air from the outside of the heat exchange tank (112) to flow in a spiral form. The outside air-inflow duct (115) comprises: a pipe type-inflow ring (115a) installed to surround an inner peripheral surface of an outside air inflow end in the heat exchange tank (112); an outside air inflow duct (115b) arranged on an outer peripheral surface of the inflow ring (115a) in communication therewith, so as to supply outside air to an interior of the inflow ring (115a) by means of a separate air inflow fan; and, a plurality of outside air sprayers (115c) arranged on an inner peripheral surface of the inflow ring (115a) in communication therewith and having a uniform interval and an inclined angle, so as to allow outside air to spray into the heat exchange tank (112) in a spiral direction to thereby increase the time for outside air staying within the heat exchange tank (112), for the purpose of improving the heat exchange efficiency.

Each of the outside air sprayers (115c) is made to change a spray angle with respect to the inflow ring (115a) in a selective manner.

By means of the outside air-inflow duct (115), the time for the outside air to travel within the heat exchange tank (112) increases, and thus, the time for the outside air to contact the heat exchange duct (113) also increases. Thereby, it is possible to improve the efficiency of drying outside air.

The heat exchange duct (113) has such a configuration as a whirlwind with a larger upper part and a narrower lower part, so that outside air rotates in a spiral way within the heat exchange tank (112) until it flows into the connection duct (130). Accordingly, it is preferable to have such a piping as to correspond to the above-described configuration, in order to increase the area contacting outside air.

By means of the heat exchanger (110), outside air flows into the inner space of the heat exchange tank (112) in a spiral way through the outside air inflow duct (115), so that the time for outside air to travel within the heat exchange tank (112) increases. Thereby, the time and the area for contacting the heat exchange duct (113) increase, and thus, it is possible to improve the efficiency of drying outside air.

The process for removing white smoke through the above-described apparatus for removing white smoke and mist will be described below.

First, dry air is produced by heating air through fuel combustion in the heat exchanger (110) and, at the same time, condensation nucleus is produced by combustion particles through fuel combustion. Then, dry air and condensation nucleus produced in the heat exchanger (110) are distantly sprayed with powerful wind pressure toward the location of white smoke and mist by means of the sprayer (120).

Here, condensation nucleus produced within the heat exchanger (110) are coupled with anion produced from tourmaline by means of the condensation anion generator (140) comprising tourmaline, wherein said tourmaline is located at an inner side of the connection duct (130) connecting the heat exchanger (110) and the sprayer (120). Thereby, anionized condensation nucleus is produced.

Dust materials included in dry air from the heat exchanger (110) are filtered by the dust collecting filter (150), which is located inside the heat exchanger (110) or between the heat exchanger (110) and the connection duct (130). Also, in order to prevent dry air from falling into a wet state while operating the sprayer (120), moisture contained in air flowing from outside is removed by moisture removal filter (160) located at the rear end of the sprayer (120).

Thereafter, by means of the moisture removal filter (160) located at the rear end of the sprayer (120), moisture in air is filtered and removed, wherein said air is drawn for spraying said dry air and anionized condensation nucleus. Then, air with moisture removed is sprayed onto white smoke or mist, along with anionized condensation nucleus and dry air produced in the heat exchanger (110).

After spraying, said dry air and anionized condensation nucleus are mixed with white smoke or mist to thereby make white smoke or mist particles anionzed due to said anionized condensation nucleus. Thus, anionized white smoke or mist particles are coupled with anionized condensation nucleus. Here, it is possible to spray the particles far away by means of wind pressure of the sprayer (120) and weight increase of the particles. In the process of spraying particles far away, white smoke or mist is precipitated due to its weight in the air. Accordingly, white smoke or mist is removed and white smoke or mist particles with small size or light weight is evaporated by means of dry air spray. As a result, white smoke or mist is completely removed.

It is preferable that the moisture removal filter (160) has a heating wire in order to prevent the filter from being frozen due to filtered moisture, when the sprayer (120) is driven to draw air from the atmosphere in winter season.

Also, it is preferable that the sprayer (120) is formed with guide vanes (not shown) at its front end, so that spray speed and spray direction may be adjusted by controlling the guide vanes when spraying dry air and anionized condensation nucleus.

If a depth from ground surface to ground base is too deep, the bellows (180) is installed to the area of the housing (190) corresponding to a front end of the sprayer (120).

The bellows (190) may extend to reach the location of white smoke or mist while the housing (180) lying on the ground surface. Accordingly, it is possible to readily remove white smoke or mist by spraying dry air and anion condensation nucleus, even if white smoke or mist is generated at the location that is inaccessible by the housing (180).

Each of the dust collecting filter (150) and the moisture removal filter (160) comprise a high voltage discharge unit (not shown) in the filter, in order to allow pollutants to be removed through discharge reaction, wherein the pollutants are captured or collected in the filter while drawing air through the filters. Accordingly, it is possible to increase lifespan of the filters and to improve filtering efficiency.

In the high voltage discharge unit, it is preferable that the high voltage discharge unit comprises a discharger with two electrodes connected to both ends of a first capacitor, which is provided with electricity from an outside high voltage source; and that a discharge electrode and a ground electrode of a discharge chamber are connected to the discharger through a second capacitor and a transformer. In the high voltage discharge unit, when a high voltage supplied from the first capacitor reaches the voltage causing dielectric breakdown between two electrodes of a discharger with a certain interval, spark discharge is generated due to dielectric breakdown between two electrodes of the discharger. Then, energy stored in a second capacitor is amplified through the transformer and is transferred to a discharge chamber, so that electric discharge is generated in discharge gas between a discharge electrode and a ground electrode within the discharge chamber. Also, when voltages stored in the second capacitor are completely discharged, dielectric between two electrodes of the discharger is restored and spark discharge between two electrodes is interrupted. Thereafter, if voltage between two electrodes reaches the dielectric breakdown voltage by charging the second capacitor with voltage of the first capacitor, spark discharge is generated once again, so that it causes discharge in the discharge chamber. The above-described processes are repeated to exhibit continuous discharge phenomenon in the discharge chamber, and thus, it is possible to remove remaining pollutants collected in the filters by means of the high voltage discharge unit.

As described above, through the removal of remaining pollutants collected in the filters, it is possible to draw air into the apparatus without any clogging phenomenon of the filters. Thereby, it is possible to maximize the efficiency of the apparatus for removing white smoke and mist and to extend the life span of the filter, so that maintenance cost can be minimized.

The operation of the high voltage discharge unit may be controlled in a periodic way or a non-periodic way according to an operator's instruction signal.

The power generating means (G) are to supply power to components, such as the search light (R) as well as the sprayer (120), the condensation nucleus ion generator (140), the dust collecting filter (150) and the moisture removal filter (160). Generally, it is preferable that the power generating means (G) are an engine type generator.

The power generating means (G) comprise an engine for generating dynamic powers on the basis of fossil fuel and a generator for converting dynamic energy of the engine to electrical energy. The power generating means (G) have their components in a box type-housing as is well known in the art.

By means of the apparatus for removing white smoke and mist, when white smoke or mist is produced due to hot water resulting from damage to piping, dry air generated by the heat exchanger (110) and anion condensation nucleus generated by the condensation nucleus ion generator (140) are sprayed onto an area of white smoke or mist, so that white smoke or mist particles are precipitated and evaporated to thereby entirely remove white smoke or mist.

Also, the components of the apparatus for removing white smoke or mist are compactly accommodated within the housing (180) with a predetermined size, so that easy movement and access to an area of white smoke and mist may be attained for removing white smoke and mist in a fast manner.

Also, the bellows (190) from the housing (180) to the location of white smoke or mist is provided, so that it is possible to spray white smoke and anion condensation nucleus to the location of white smoke and mist through the bellows (190) for removing white smoke or mist, even if it is impossible for the housing (180) to reach the location of white smoke and mist due to a deeper depth from ground surface to ground base.

Also, the search light (R) is mounted to the upper side of the housing, and thus, it is possible to easily perform the white smoke removal operation during night time.

Although the above description describes the specific embodiment of the present invention, many variants may be realized without departing from claim scope of the present invention. Thus, the scope of the present invention shall not be defined by the above described embodiments, but it shall be defined by the attached claims and the equivalents thereof.

## Claims

1. An apparatus for removing white smoke and mist, comprising:
a heat exchanger (110) for generating dry air and condensation nucleus, wherein said dry air is produced by heating air through fuel combustion and said condensation nucleus is produced from combustion particles through fuel combustion;
a sprayer (120) connected to the heat exchanger (110) via a connection duct (130) so as to receive said dry air and said condensation nucleus from the heat exchanger (110) and to spray said dry air and said condensation nucleus far away with a powerful wind pressure toward the location where white smoke or mist is generated;
a condensation nucleus anion generator (140) located within the connection duct (130) connecting the heat exchanger (110) to the sprayer (120), so as to generate anion and to make the generated anion to be coupled with the condensation nucleus, to thereby produce anionized condensation nucleus;
a dust collecting filter (150) installed between the heat exchanger (110) and the connection duct (130) so as to filter dust material from said dry air;
a moisture removal filter (160) formed at a rear end of the sprayer (120) so as to remove moisture while drawing air from atmosphere;
a housing (180) within which the heat exchanger (110), the connection duct (130), the sprayer (120), the dust collecting filter (150) and the moisture removal filter (160) are mounted in a compact manner, wherein a fuel tank (170) supplying fuel for heating air in the heat exchanger (110) is provided in the housing and wherein the housing is mobile by means of casters (C) on its lower side; and
a bellows (190) located at a lower and outer side of the housing (180) corresponding to a front end of the sprayer (120), wherein the bellows (190) is in communication with the sprayer (120) and extends with a predetermined length.

2. The apparatus as claimed in claim 1, further comprising a tilt type-search light (R) mounted to an exterior upper side of the housing (180).

3. The apparatus as claimed in claim 1, further comprising power generating means (G) located inside or outside the housing (180), wherein the power generating means supply operation power to the sprayer (120), the condensation nucleus ion generator (140), the dust collecting filter (150) and the moisture removing filter (160).

4. The apparatus as claimed in claim 1,
wherein the heat exchanger (110) comprises:
a combustion tank (111) for fuel combustion;
a heat exchange tank (112) located at a side of the combustion tank (111) to receive air inflow from outside and to provide a space for heat-exchanging with combustion heat;
a heat exchange duct (113) extending from the combustion tank (111) and configuring a zigzag form or a spiral form within an interior space of the heat exchange tank (112), wherein the heat exchange duct (113) allows travelling of combustion heat so as attain heat exchange of outside air flowing into the heat exchange tank (112);
a radiation preventive duct (114) extending from an end of the heat exchange duct (113) and configuring a zigzag form or a spiral form on an outer surface of the heat exchange tank (112), so as to allow travelling of combustion heat after heat exchange; and,
an outside air-inflow duct (115) for allowing outside air to flow into the heat exchange tank (112) in a spiral form, so as to increase the time for outside air to travel in the heat exchange tank (112).

5. The apparatus as claimed in claim 4,
wherein the heat exchange duct (113) comprises:
a heat exchange tube (113a) with a predetermined diameter;
heat transfer plates (113b) in the form of a circular plate, which are bonded to an outer peripheral surface of the heat exchange tube (113a) in a uniform interval; and,
heat transfer fins (113c) bended at an edge of the heat transfer plate (113b).

6. The apparatus as claimed in claim 5,
wherein the outside air-inflow duct (115) comprises:
a pipe type-inflow ring (115a) installed to surround an inner peripheral surface of an outside air inflow end in the heat exchange tank (112);
an outside air inflow duct (115b) arranged on an outer peripheral surface of the inflow ring (115a) in communication therewith, so as to supply outside air to an interior of the inflow ring (115a) by means of an outside air inflow fan; and
a plurality of outside air sprayers (115c) arranged on an inner peripheral surface of the inflow ring (115a) in communication therewith and having a uniform interval and an inclined angle, so as to allow outside air to spray into the heat exchange tank (112) in a spiral direction.

7. The apparatus as claimed in claim 1,
wherein each of the dust collecting filter (150) and the moisture removal filter (160) has a high voltage discharge unit in the filter,
wherein the high voltage discharge unit comprises a discharger with two electrodes connected to both ends of a first capacitor, which is provided with electricity from an outside high voltage source; and,
wherein a discharge electrode and a ground electrode of a discharge chamber are connected to the discharger through a second capacitor and a transformer.

8. The apparatus as claimed in claim 1, further comprising a search light (R) mounted to an end of the bellows (190), wherein the search light (R) is provided with operation power from a battery and wherein the search light (R) is controlled by an on/off switch installed on a handle for gripping the bellows (190).
